# EUROPEAN PATENT SPECIFICATION

(11) **EP 1 590 402 B1**
(45) Date of publication and mention of the grant of the patent: **02.11.2011**
(21) Application number: 04705416.8
(22) Date of filing: 27.01.2004
(51) Int. Cl.: C08L 33/06, C08L 25/14, C08G 85/00, C08G 81/02, C08J 11/06, C08J 3/22

(54) **SOLID CONCENTRATE COMPOSITION FOR POLYMERIC CHAIN EXTENSION**
FESTE KONZENTRATZUSAMMENSETZUNG FÜR DIEPOLYMERKETTENVERLÄNGERUNG
COMPOSITION DE CONCENTRE SOLIDE POUR ALLONGEMENT DE CHAINE POLYMERIQUE

(30) Priority: 29.01.2003 US 354134
(43) Date of publication of application: 02.11.2005
(73) Proprietor: Clariant Finance (BVI) Limited, Road Town, Tortola (VG)
(72) Inventor: BLASIUS, William, G., Jr., Charlton, MA 01507 (US); KARAYAN, Vahe, Potomac Falls, VA 20165 (US); DODDS, David, R., Jr., LaCrescent, Minnesota 55947 (US)
(74) Representative: Hütter, Klaus
(86) International application number: PCT/EP2004/000697
(87) International publication number: WO 2004/067629

(56) References cited:
- CH-A- 686 082
- DE-A- 3 924 237
- US-A1- 2002 156 188

## Description

### BACKGROUND OF THE INVENTION

The present invention relates generally to concentrates employed in the formation of step-growth polymers, and in particular, to a chain extension concentrate for step-growth polymers.

Many step-growth polymers, including polyesters, polyamides, polycarbonates, and polyurethanes are widely used to make plastic products such as films, bottles, sheet and other molded and extruded products. The mechanical and physical properties of these polymers are highly dependent on their molecular weights.

In a life cycle, these materials may experience a synthesis process, followed by an extrusion step, and a final processing step which may be another compounding extrusion operation followed by thermoforming, blow molding, or fiber spinning, or they can be injection molded in the molten state, with all of these steps occurring under high temperature conditions. In addition, in recent years, increased attention has been focused on improved methods of recycling the articles made from these polymers, with an eye toward resource conservation and environmental protection. The processing steps involved in producing and recycling these polymers also involve high temperatures.

In each one of these high temperature steps, particularly during the compounding/processing and reclaiming/recycling processes, some degree of polymer molecular weight degradation occurs. This molecular weight degradation may occur via high temperature hydrolysis, alcoholysis or other depolymerization mechanisms well know for these polycondensates. It is known that molecular weight degradation negatively affects the mechanical, thermal, and rheological properties of materials, thus preventing them from being used in demanding applications or from being recycled in large proportions in their original applications. Today, recycled or reprocessed polycondensates with deteriorated molecular weight can only be used in very low proportions in demanding applications or in larger proportions in less demanding applications. For instance, due to molecular weight degradation, recycled bottle grade polyethylene terephthalate (PET) is mostly employed exclusively in film and other low end applications. Similarly, recycled polycarbonate from compact disk (CD) scrap, mostly goes to low end applications. For these reasons, the current recycling technologies are limited to a narrow range of applications.

Today, there exist a considerable number of processes in the art, employed to minimize loss in molecular weight; and maintain or even increase the molecular weight of the polycondensates for processing or recycling. Most of these routes employ as main processing equipment either an extruder, a solid state polycondensation reactor, or both in sequence, or similar equipment designed for melt or high viscosity material processing. As an instrumental part of any of these processes, chemical reactants known in the art as "chain extenders" are employed. Chain extenders are, for the most part, multifunctional molecules that during any or all of the described processing steps are added as additives to the extruder or reactor with the purpose of "recoupling" polycondensate chains that have depolymerized to some degree. Normally the chain extender has two or more chemical groups that are reactive to the chemical groups formed during the molecular weight degradation process. By reacting the chain extender molecule to two or more polycondensate fragments it is possible to re-couple them (by bridging them), thus decreasing or even reverting the molecular weight degradation process. In the art there are numerous chain extender types and compositions, polycondensate formulations, and processing conditions described to this end.

Di- or poly-functional epoxides, epoxy resins or other chemicals having two or more epoxy radicals, are an example of chain extending modifiers that have been used to increase the molecular weight of recycled polymers. These di- or poly-functional epoxides are generally made using conventional methods by reacting a epichlorohydrin with a molecule having two or more terminal active hydrogen groups. Examples of such chain extenders include bis-phenol type epoxy compounds prepared by the reaction of bisphenol A with epichlorohydrin, novolak type epoxy compounds prepared by reacting novolak resins with epichlorohydrin, polyglycidyl esters formed by reacting carboxylic acids with epicholorhydrin, and glycidyl ethers prepared from aliphatic alcohols and epichlorohydrin. Additionally, various acrylic copolymers have been used as polymer additives to improve the melt strength and melt viscosity of polyesters and polycarbonates. These additives generally include copolymers derived from various epoxy containing compounds and olefins, such as ethylene. However, these chain extenders have met with limited success in solving the problem of molecular weight degradation in reprocessed polymers. The shortcomings of these copolymer chain extenders can be attributed, at least in part, to the fact that they are produced by conventional polymerization techniques which produce copolymers with physical characteristics which limit their capacity to act as chain extenders.

Two main problems persist today in the art. First, in order to have efficient chain extension at reasonable residence times (i.e., good productivity in a given size equipment) either in the extrusion or solid state reactor systems, most of the known chain extenders require the use of pre-dried polycondensate material, operation at high vacuum, and varying amounts of catalyst and stabilizers, to be employed during processing. Without these features the extent of molecular weight increase is limited and the resulting product shows lower molecular weight and less than desired properties.

Second, as the functionality of the chain extender increases, so does the number of polycondensate chains that can be coupled onto each chain extender molecule, and thus its effectiveness in re-building molecular weight. However, it is easy to see that as the functionality of these chain extenders increase so does the degree of branching of the resulting product and the potential for onset of gelation. People skilled in the art understand the strong negative effects that extensive branching has on the degree of crystallinity and thus on the mechanical properties of a semi-crystalline polycondensate, as well as the negative implications of the presence of varying amounts of gel in any product. As a result of these negative effects there is a limit for the maximum functionality that can be employed with these chain extenders. Given, then, that the maximum functionality is limited, effective chain extension currently requires relatively large concentrations of lower functionality (< 4 functional groups/chain) chain extenders.

The relatively high costs associated with these two limitations of the current art render the re-processing or recycling of these polycondensates uneconomical.

One type of chain extender that has been effective in overcoming the problems encountered by the prior art are those based on epoxy-functional styrene acrylic copolymers produced from monomers of at least one epoxy-functional acrylic monomer and at least non-functional styrenic and/or acrylate monomer. Such chain extenders are the subject US Patent Application 2004/0138381.

Notwithstanding the ability of such epoxy-functional styrene acrylic copolymer chain extenders disclosed in US Patent Application 2004/0138381, to outperform prior art chain extenders, these chain extenders also exhibit certain disadvantages when introduced directly into a molding apparatus. The chain extenders are difficult to pelletize or otherwise agglomerate. Furthermore, the epoxy-functional styrene acrylic copolymer chain extenders are highly reactive in comparison to prior chain extenders. As a result, with certain applications, the epoxy-functional styrene acrylic copolymer chain extenders have a tendency to produce overreaction conditions in the feed or introduction zone of a molding apparatus or extruder. These overreaction conditions are a consequence of the disparity in melting temperature between the epoxy-functional styrene acrylic copolymer chain extenders and the step-growth polymers with which they are employed. The epoxy-functional styrene acrylic copolymer chain extenders have a melting temperature of approximately 50°C, whereas the typical process temperatures for step-growth polymers can range from approximately 240°C to 300°C. Thus, when the epoxy-functional styrene acrylic copolymer chain extenders are introduced directly to the feed zone of a processing apparatus, the chain extender melts and begins to react with the step-growth polymer before proper dispersion and homogenization is achieved. When the epoxy-functional styrene acrylic copolymer chain extenders prematurely react, localized areas of overreaction produce gelation which in turn interferes with proper article formation. The problem of over reaction is especially pronounced when manufacturing articles having a minimal thickness, such as, for example, fibers or films.

Consequently, there exists a need in the industry for a method, and a concentrate composition or masterbatch which can effectively deliver, and allow proper homogenization of, an epoxy-functional styrene acrylic copolymer chain extender within a polymer.

DE-A-3924237 discloses thermoplastic resins comprising an epoxy-functionalized styrene-acrylate resin, a second resin containing styrene and acrylate monomers but not containing epoxy groups, and a resin selected from PET, other polyesters, polyamides and other polycondensation resins.

CH-A-686082 and US-A-2002/0156188 relate to the reaction of polymers with chain extenders in order to increase the molecular weight of said polymers.

### SUMMARY OF THE INVENTION

Accordingly, in one embodiment, the present invention is directed to a solid concentrate composition useful in modifying the molecular weight of a step-growth polymer comprising at least one epoxy-functional styrene acrylic copolymer and at least one non-reactive carrier resin, as claimed in claim 1.

According to another embodiment, a solid concentrate composition includes at least one epoxy-functional styrene acrylic copolymer and at least one co-reactive epoxy functional carrier resin, as claimed in claim 2.

The present invention is also directed to a method for preparing a polymer by reacting at least one epoxy-functional styrene acrylic copolymer with a carrier, wherein said carrier is selected from the group consisting of a non-reactive carrier resin and a co-reactive epoxy functional resin and melt compounding said composition with at least one polymer having at least one oxirane functional group, as claimed in claim 8.

As the chain extender is physically spread out and separated within the carrier, when the solid concentrate composition is mixed with the polymer, the potential for localized concentrations of chain extender is minimized. Furthermore, when introduced into a molding apparatus, the solid concentrate composition of the present invention prevents premature reaction of the epoxy-functional styrene acrylic copolymer chain extender within the let down polymer by increasing the time required to melt the concentrate. This delayed reaction time permits the chain extender to be fully dispersed throughout the polymer, resulting in homogeneous chain extension.

### DETAILED DESCRIPTION OF THE PREFERRED EMBODIMENTS

The present invention is directed to a solid concentrate or masterbatch composition comprising at least one epoxy-functional styrene acrylic copolymer chain extender and at least one carrier resin. The carrier resin is either a non reactive resin, a co-reactive epoxy functional resin or mixtures thereof. The solid concentrate composition may be used to increase chain extension in any polymer having at least one oxirane functional group, but finds particular application in conjunction with condensate polymers.

The epoxy functional styrene acrylic copolymer chain extender is preferably selected from those disclosed in United States Patent Applications 2004/0138381. Briefly, non limiting examples of epoxy functional acrylic monomers for use in the epoxy functional styrene acrylic copolymer include both acrylates and methacrylates. Examples of these monomers include, but are not limited to, those containing 1,2-epoxy groups such as glycidyl acrylate and glycidyl methacrylate. Suitable acrylate and methacrylate monomers include, but are not limited to, methyl acrylate, ethyl acrylate, n-propyl acrylate, i-propyl acrylate, nbutyl acrylate, s-butyl acrylate, i-butyl acrylate, t-butyl acrylate, n-amyl acrylate, iamyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, n-propyl methacrylate, n-butyl methacrylate, i-propyl methacrylate, i-butyl methacrylate, namyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, and isobornyl methacrylate. The preferred non-functional acrylate and non-functional methacrylate monomers are butyl acrylate, butyl methacrylate, methyl methacrylate, iso-butyl methacrylate, cyclohexyl acrylate, cyclohexyl methacrylate, isobornyl acrylate and isobornyl methacrylate and combinations thereof. Styrenic monomers for use in the present invention include, but are not limited to, styrene, alpha-methyl styrene, vinyl toluene, p-methyl styrene, t-butyl styrene, o-chlorostyrene, vinyl pyridine, and mixtures of these species. Preferred styrenic monomers include styrene and alpha-methyl styrene.

The chain extenders can be produced by continuously charging into a reactor at least one epoxy functional acrylic monomer and at least one non-functional free radical polymerizable monomer, including a non-functional acrylate monomer, a non-functional methacrylate monomer, a non-functional styrenic monomer, and combinations thereof. The reactor may also optionally be charged with at least one free radical polymerization initiator and/or one or more solvents. The reactor is maintained at an effective temperature for an effective period of time to cause polymerization of the monomers to produce a polymeric product for the monomers formed substantially free of gel particles within the reactor.

The non reactive carrier resin for use with the solid concentrate composition includes, but are not limited to, polyethylene, polyethylene-norbomene copolymers, polypropylene, polybutylene, polymethyl pentene, polyethylene-vinyl acetate copolymers, polystyrene, polystyrene block copolymers, polymethacrylates, polyacrylates, polyvinyl chloride, chlorinated polyethylene, polyvinylidene chloride, polyethylene-acrylate copolymers. The most preferred non-reactive carrier resin is polystyrene-methylmethacrylate copolymers. The epoxy functional co-reactive resins capable for use as a carrier resin include, but are not limited to, glycidyl methacrylate co and terpolymers, and epoxidized natural rubber. The most preferred epoxy functional co-reactive carrier resin is polyethylene-methyl acrylate-glycidyl methacrylate. Preferably, non-reactive carrier resin is utilized, as the non reactive carrier resin provides an inert carrier, thereby preventing the chain extender from reacting until the concentrate is dispersed within the let down polymer. That is, the chain extender does not react with the non-reactive carrier resin to cause any appreciable chain extension within the non-reactive carrier resin. Preferred carrier resins for use in conjunction with the solid concentrate composition include low density polyethylene, polystyrene-co-methylmethacrylate, polyethylene-co-butylacrylate-co-glycidyl methacrylate and behenamide wax.

The exact ratio of chain extender to carrier resin in the concentrate composition is application specific, depending upon the activity of the carrier resin and the desired degree of chain extension in final polymeric product. The epoxy function styrene acrylic copolymer chain extender may be present in the solid concentrate composition in amount between approximately 0.01 to 99.9 wt%, preferably between approximately 5.0 and 50.0wt%; and most preferably between approximately 10.0 to 25.0%.

Other materials which are substantially chemically inert may be added to the solid concentrate depending upon the desired properties of the polymer. Representative examples of such materials include anti-static agents, foaming agents, flame retardants, color concentrates, anti-oxidants, UV stabilizers, antiblocking agents, anti-flog agents, anti-slip agents, anti-microbial agents,and slip additives.

The method by which the solid concentrate is made is not particularly limiting and can be accomplished by any known masterbatching process. Further, the concentrate of the present invention can be formed in a variety of geometrical shapes, including, but not limited to, pellets, spheres, flakes, agglomerates and prills.

The solid concentrate may be used to impart chain extension properties on any let down polymer with at least one oxirane reactive group. Representative examples of such polymers include step-growth polymers such as, for example, polyamides, polyesters and polycarbonates. The polymer can also be an addition polymer such as, for example, polyurethanes, polystyrene co-maleic anhydride or polyethylene co-acrylic acid.

The solid concentrate composition is melt compounded with the let down polymer in any thermoplastic forming apparatus normally employed in the industry, and is melted at a temperature appropriate for the let down polymer, in accordance with normal molding techniques. The exact concentration of the solid concentrate composition is dependent upon the desired end characteristics of the let down polymer, and is therefore application specific. The amount of solid concentrate composition may range from 0.1 to 100 wt%, per weight of the total batch. The solid concentrate composition of the present invention may be used in the manufacture of various polymeric articles, non limiting examples of which include, polymeric sheets, films, bottles, fibers or multidimensional articles.

The following examples will serve to more fully illustrate the invention.

### EXAMPLES

### EXAMPLE 1:

Two formulations were injection molded in accordance with normal industry procedure using an Arburg Allrounder 320 Molding Machine and a Standard Color Chip mold. The formulations were as follows:

### Formulations:

1. Formulation A = 0.25% epoxy functional styrene acrylic copolymer chain extender, and 99.75% Industrial Grade PET.
2. Formulation B = 1.25% 20% Chain Extender Concentrate of the present invention, and 98.75 Industrial Grade PET.

In Formulation A the epoxy functional styrene acrylic copolymer chain extender was Joncryl^{™} ADR 4367, while in Formulation B, the Concentrate was a mixture of Eastman Durastar^{™} DS 2010 Polyester Joncryl^{™} ADR 4367 and Nova^{™} NAS 21.

### Results:

### Formulation A

a. Process was inconsistent due to very low let down ratio.
b. Chain Extender quickly plated out on screw.
c. After approximately 20 shots formulation A became unprocessable.

### Formulation B

a. Process stabilized quickly.
b. Significant plate out of Chain Extender was effectively eliminated.
c. After approximately 200 shots formulation B remained processable.

### EXAMPLE 2:

Several formulations were pelletized to determine the stability of the epoxy-functional styrene acrylic copolymer chain extender in raw form vs. in concentrate form.

| % chain extender | %LDPE (carrier resin) | Brittleness of pellet |
|---|---|---|
| 100 | 0 | turns to dust in pelletizer |
| 95 | 5 | can be pelletized, very easy to crush |
| 80 | 20 | easily pelletized, easy to crush |
| 50 | 50 | easily pelletized, harder to crush |
| 20 | 80 | easily pelletized, very tough |

The above table clearly demonstrates that the solid concentrate composition of the present invention yields a stable, processable composition with increased shelf life compared to the chain extender employed alone.

## Claims

1. A solid concentrate composition comprising:
a) at least one epoxy-functional styrene acrylic copolymer; and
b1) at least one non-reactive resin, which resin b1) is selected from the group consisting of polyethylene, polyethylene-norbonene copolymers, polypropylene, polybutylene, polymethyl pentene, polyethylene-vinylacetate copolymers, polymethacrylates, polyacrylates, polyvinyl chloride, chlorinated polyethylene, polyvinylidene chloride, and polyethylene-acrylate copolymers,
or wherein said at least one non-reactive resin b1) is a polystyrene-methylmethacrylate copolymer.

2. A solid concentrate composition comprising:
a) at least one epoxy-functional styrene acrylic copolymer; and
b2) at least one co-reactive epoxy functional carrier resin, which resin b2) is selected from the group consisting of polyethylene-methylacrylate-glycidyl methacrylate, polyethylene co-butylacrylate co-glycidyl methacrylate, and epoxidized natural rubber.

3. The solid concentrate composition of claim 1 and 2, wherein the epoxy functional acrylic monomer for said at least one epoxy-functional styrene acrylic copolymer is selected from the group consisting of acrylates and methacrylates, and wherein the styrenic monomer for said at least one epoxy-functional styrene acrylic copolymer is selected from the group consisting of styrene, alpha-methyl styrene, vinyl toluene, p-methyl styrene, t-butyl styrene, o-chlorostyrene, vinyl pyridine, and mixtures thereof.

4. The solid concentrate composition of claim 2, wherein said at least one co-reactive epoxy functional carrier resin is polyethylene-methyl acrylate-glycidyl methacrylate, or polyethylene-co-butylacrylate-co-glycidyl methacrylate.

5. A polymeric article comprising the composition of claim 1.

6. A polymeric article comprising the composition of claim 2.

7. The polymeric article of claim 5 and 6, wherein said polymeric article is in a form selected from the group consisting of a film, sheet, bottle, fiber and molded multidimensional article.

8. A method for preparing a polymer comprising the step of melt compounding a solid concentrate composition comprising:
a) at least one epoxy-functional styrene acrylic copolymer; and
b1) at least one non-reactive resin,
or comprising:
a) at least one epoxy-functional styrene acrylic copolymer; and
b2) at least one co-reactive epoxy functional carrier resin, which resin b2) is selected from the group consisting of glycidyl methacrylate co and terpolymers, and epoxidized natural rubber,
with at least one polymer having at least one oxirane functional group.

9. The method of claim 8, wherein the epoxy-functional acrylic monomer for said at least one epoxy-functional styrene acrylic copolymer is selected from the group consisting of acrylates and methacrylates, and wherein the styrenic monomer for said at least one styrene acrylic copolymer is selected from the group consisting of styrene, alpha-methyl styrene, vinyl toluene, p-methyl styrene, t-butyl styrene, o-chlorostyrene, vinyl pyridine, and mixtures thereof.

10. The method of claim 8, wherein said non-reactive resin is selected from the group consisting of polyethylene, polyethylene-norbomene copolymers, polypropylene, polybutylene, polymethyl pentene, polyethylene-vinyl acetate copolymers, polystyrene, polystyrene block copolymers, polymethacrylates, polyacrylates, polyvinyl chloride, chlorinated polyethylene, polyvinylidene chloride, and polyethylene-acrylate copolymers.

11. The method of claim 8, wherein said non-reactive carrier resin is a polystyrene-methylmethacrylate copolymer.

12. The method of claim 8, wherein said co-reactive epoxy functional resin is selected from the group consisting of glycidyl methacrylate co and terpolymers, and epoxidized natural rubber.

13. The method of claim 8, wherein said co-reactive epoxy functional resin is polyethylene-methl acrylate-glycidyl methacrylate.

14. The method of claim 8, wherein said at least one polymer is selected from the group consisting of a step-growth polymer and an addition polymer.

15. The method of claim 14, wherein said step-growth polymer is selected from the group consisting of polyamides, polyesters and polycarbonates.

16. The method of claim 14, wherein said addition polymer is selected from the group consisting of polyurethanes, polystyrene co-maleic anhydride and polyethylene co acrylic acid.

## Patentansprüche

1. Feste Konzentratzusammensetzung, umfassend:
a) mindestens ein epoxidfunktionelles Styrol-Acryl-Copolymer und
b1) mindestens ein unreaktives Harz, wobei das Harz b1) aus der Gruppe bestehend aus Polyethylen, Polyethylen-Norbornen-Copolymeren, Polypropylen, Polybutylen, Polymethylpenten, Polyethylen-Vinylacetat-Copolymeren, Polymethacrylaten, Polyacrylaten, Polvinylchlorid, chloriertem Polyethylen, Polyvinylidenchlorid und Polyethylen-Acrylat-Copolymeren ausgewählt ist oder wobei das mindestens eine unreaktive Harz b1) ein Polystyrol-Methylmethacrylat-Copolymer ist.

2. Feste Konzentratzusammensetzung, umfassend:
a) mindestens ein epoxidfunktionelles Styrol-Acryl-Copolymer und
b2) mindestens ein coreaktives epoxidfunktionelles Trägerharz, wobei das Harz b2) aus der Gruppe bestehend aus Polyethylen-Methacrylat-Glycidylmethacrylat, Polyethylen-co-butylacrylat-coglycidylmethacrylat und epoxidiertem Naturkautschuk ausgewählt ist.

3. Feste Konzentratzusammensetzung nach Anspruch 1 und 2, wobei das epoxidfunktionelle Acrylmonomer für das mindestens eine epoxidfunktionelle Styrol-Acryl-Copolymer aus der Gruppe bestehend aus Acrylaten und Methacrylaten ausgewählt ist und das Styrolmonomer für das mindestens eine epoxidfunktionelle Styrol-Acryl-Copolymer aus der Gruppe bestehend aus Styrol, alpha-Methylstyrol, Vinyltoluol, p-Methylstyrol, t-Butylstyrol, o-Chlorstyrol, Vinylpyridin und Mischungen davon ausgewählt ist.

4. Feste Konzentratzusammensetzung nach Anspruch 2, wobei es sich bei dem mindestens einen coreaktiven epoxidfunktionellen Trägerharz um Polyethylen-Methylacrylat-Glycidylmethacrylat oder Polyethylen-co-butylacrlyat-co-glycidylmethacrylat handelt.

5. Polymergegenstand, umfassend die Zusammensetzung nach Anspruch 1.

6. Polymergegenstand, umfassend die Zusammensetzung nach Anspruch 2.

7. Polymergegenstand nach Anpruch 5 und 6, wobei der Polymergegenstand in einer Form aus der Gruppe bestehend aus einem Film, einer Folie, einer Flasche, einer Faser und einem mehrdimensionalen Formkörper vorliegt.

8. Verfahren zur Herstellung eines Polymers, bei dem man eine feste Konzentratzusammensetzung, umfassend:
a) mindestens ein epoxidfunktionelles Styrol-Acryl-Copolymer und
b1) mindestens ein unreaktives Harz
oder:
a) mindestens ein epoxidfunktionelles Styrol-Acryl-Copolymer und
b2) mindestens ein coreaktives epoxidfunktionelles Trägerharz, wobei das Harz b2) aus der Gruppe bestehend aus Glycidylmethacrylat-Copolymeren und -Terpolymeren und epoxidiertem Naturkautschuk ausgewählt ist,
in der Schmelze mit mindestens einem Polymer mit mindestens einer oxiranfunktionellen Gruppe compoundiert.

9. Verfahren nach Anspruch 8, bei dem das epoxidfunktionelle Acrylmonomer für das mindestens eine epoxidfunktionelle Styrol-Acryl-Copolymer aus der Gruppe bestehend aus Acrylaten und Methacrylaten ausgewählt ist und das Styrolmonomer für das mindestens eine Styrol-Acryl-Copolymer aus der Gruppe bestehend aus Styrol, alpha-Methylstyrol, Vinyltoluol, p-Methylstyrol, t-Butylstyrol, o-Chlorstyrol, Vinylpyridin und Mischungen davon ausgewählt ist.

10. Verfahren nach Anspruch 8, bei dem das unreaktive Harz aus der Gruppe bestehend aus Polyethylen, Polyethylen-Norbornen-Copolymeren, Polypropylen, Polybutylen, Polymethylpenten, Polyethylen-Vinylacetat-Copolymeren, Polystyrol, Polystyrol-Blockcopolymeren, Polymethacrylaten, Polyacrylaten, Polvinylchlorid, chloriertem Polyethylen, Polyvinylidenchlorid und Polyethylen-Acrylat-Copolymeren ausgewählt ist.

11. Verfahren nach Anspruch 8, bei dem das unreaktive Trägerharz ein Polystyrol-Methylmethacrylat-Copolymer ist.

12. Verfahren nach Anspruch 8, bei dem das coreaktive epoxidfunktionelle Harz aus der Gruppe bestehend aus Glycidylmethacrylat-Copolymeren und -Terpolymeren und epoxidiertem Naturkautschuk ausgewählt ist.

13. Verfahren nach Anspruch 8, bei dem es sich bei dem coreaktiven epoxidfunktionellen Harz um Polyethylen-Methylacrylat-Glycidylmethacrylat handelt.

14. Verfahren nach Anspruch 8, bei dem das mindestens eine Polymer aus der Gruppe bestehend aus einem durch eine Stufenwachstumsreaktion hergestellten Polymer und einem Polymerisat ausgewählt ist.

15. Verfahren nach Anspruch 14, bei dem das durch eine Stufenwachstumsreaktion hergestellte Polymer aus der Gruppe bestehend aus Polyamiden, Polyestern und Polycarbonaten ausgewählt ist.

16. Verfahren nach Anspruch 14, bei dem das Polymerisat aus der Gruppe bestehend aus Polyurethanen, Polystyrol-co-maleinsäureanhydrid und Polyethylen-co-acrylsäure ausgewählt ist.

## Revendications

1. Composition de concentré solide comprenant :
a) au moins un copolymère acrylique à base de styrène à fonction époxy ; et
b1) au moins une résine non réactive, laquelle résine b1) est choisie dans le groupe constitué par le polyéthylène, les copolymères polyéthylène-norbornène, le polypropylène, le polybutylène, le polyméthylpentène, les copolymères polyéthylène-acétate de vinyle, les polyméthacrylates, les polyacrylates, le poly(chlorure de vinyle), le polyéthylène chloré, le poly(chlorure de vinylidène) et les copolymères polyéthylène-acrylate, ou bien dans laquelle ladite au moins une résine non réactive b1) est un copolymère polystyrène-méthacrylate de méthyle.

2. Composition de concentré solide comprenant :
a) au moins un copolymère acrylique à base de styrène à fonction époxy ; et
b2) au moins une résine support à fonction époxy co-réactive, laquelle résine b2) est choisie dans le groupe constitué par un polyéthylène-acrylate de méthyle-méthacrylate de glycidyle, un polyéthylène-co-acrylate de butyle-co-méthacrylate de glycidyle et du caoutchouc naturel époxydé.

3. Composition de concentré solide selon les revendications 1 et 2, dans laquelle le monomère acrylique à fonction époxy pour ledit au moins un copolymère acrylique à base de styrène à fonction époxy est choisi dans le groupe constitué par les acrylates et les méthacrylates, et dans laquelle le monomère styrénique pour ledit au moins un copolymère acrylique à base de styrène à fonction époxy est choisi dans le groupe constitué par le styrène, l'alpha-méthylstyrène, le vinyltoluène, le p-méthylstyrène, le t-butylstyrène, l'o-chlorostyrène, la vinylpyridine, et des mélanges de ceux-ci.

4. Composition de concentré solide selon la revendication 2, dans laquelle ladite au moins une résine support à fonction époxy co-réactive est un polyéthylène-acrylate de méthyle-méthacrylate de glycidyle, ou un polyéthylène-co-acrylate de butyle-co-méthacrylate de glycidyle.

5. Article polymère comprenant la composition selon la revendication 1.

6. Article polymère comprenant la composition selon la revendication 2.

7. Article polymère selon les revendications 5 et 6, dans lequel ledit article polymère est sous une forme choisie dans le groupe constitué par un film, une feuille, une bouteille, une fibre et un article multidimensionnel moulé.

8. Procédé de préparation d'un polymère comprenant l'étape de formulation en fusion d'une composition de concentré solide comprenant :
a) au moins un copolymère acrylique à base de styrène à fonction époxy ; et
b1) au moins une résine non réactive,
ou comprenant :
a) au moins un copolymère acrylique à base de styrène à fonction époxy ; et
b2) au moins une résine support à fonction époxy co-réactive, laquelle résine b2) est choisie dans le groupe constitué par les copolymères et terpolymères de méthacrylate de glycidyle et le caoutchouc naturel époxydé,
avec au moins un polymère comportant au moins un groupe fonctionnel oxirane.

9. Procédé selon la revendication 8, dans lequel le monomère acrylique à fonction époxy pour ledit au moins un copolymère acrylique à base de styrène à fonction époxy est choisi dans le groupe constitué par les acrylates et les méthacrylates, et dans lequel le monomère styrénique pour ledit au moins un copolymère acrylique à base de styrène est choisi dans le groupe constitué par le styrène, l'alpha-méthylstyrène, le vinyltoluène, le p-méthylstyrène, le t-butylstyrène, l'o-chlorostyrène, la vinylpyridine, et des mélanges de ceux-ci.

10. Procédé selon la revendication 8, dans lequel ladite résine non réactive est choisie dans le groupe constitué par le polyéthylène, les copolymères polyéthylène-norbornène, le polypropylène, le polybutylène, le polyméthylpentène, les copolymères polyéthylène-acétate de vinyle, le polystyrène, les copolymères à blocs de polystyrène, les polyméthacrylates, les polyacrylates, le poly(chlorure de vinyle), le polyéthylène chloré, le poly(chlorure de vinylidène) et les copolymères polyéthylène-acrylate.

11. Procédé selon la revendication 8, dans lequel ladite résine support non réactive est un copolymère polystyrène-méthacrylate de méthyle.

12. Procédé selon la revendication 8, dans lequel ladite résine à fonction époxy co-réactive est choisie dans le groupe constitué par les copolymères et terpolymères de méthacrylate de glycidyle et le caoutchouc naturel époxydé.

13. Procédé selon la revendication 8, dans lequel ladite résine à fonction époxy co-réactive est un polyéthylène-acrylate de méthyle-méthacrylate de glycidyle.

14. Procédé selon la revendication 8, dans lequel ledit au moins un polymère est choisi dans le groupe constitué par un polymère à croissance étagée et un polymère d'addition.

15. Procédé selon la revendication 14, dans lequel ledit polymère à croissance étagée est choisi dans le groupe constitué par les polyamides, les polyesters et les polycarbonates.

16. Procédé selon la revendication 14, dans lequel ledit polymère d'addition est choisi dans le groupe constitué par les polyuréthanes, un polystyrène-co-anhydride maléique et un polyéthylène-co-acide acrylique.
